# EUROPEAN PATENT APPLICATION

(11) **EP 4 414 551 A1**
(43) Date of publication of application: **14.08.2024**
(21) Application number: 22878866.7
(22) Date of filing: 05.10.2022
(51) Int. Cl.: F03B 13/26, F03B 11/08

(54) **TIDAL POWER GENERATING APPARATUS USING TIDE-INDUCING HYDRAULIC PIPELINE AND TIDAL POWER PIPELINE TURBINE**

(30) Priority: 07.10.2021 KR 20210133244
(71) Applicant: Kim, Seong Sik, Siheung-si, Gyeonggi-do 15052 (KR)
(72) Inventor: Kim, Seong Sik, Siheung-si, Gyeonggi-do 15052 (KR)
(74) Representative: Rau, Schneck & Hübner Patentanwälte Rechtsanwälte PartGmbB
(86) International application number: PCT/KR2022/014945
(87) International publication number: WO 2023/059045

(57) **Abstract**

The present invention relates to a tide current power generation device using a tidal current induction hydraulic pipeline and a tidal current power generation tube turbine for using both directional flood and ebb tides to implement power generation, and achieving a multi-layer and parallel structure in the water to build a large-scale tidal power generation complex. To this end, the device according to the present invention includes: a plurality of concrete pile; a support frame part; a tidal current power generation tube turbine; a tidal current induction hydraulic pipeline; a plurality of power transmission parts; and an upper plate part.

## Description

### Field of the invention

The present invention relates to a tide current power generation device using a tidal current induction hydraulic pipeline and a tidal current power generation tube turbine, and more particularly, to a tide current power generation device using a tidal current induction hydraulic pipeline and a tidal current power generation tube turbine to use both directional flood and ebb tides for implementing power generation, and achieve a multi- stage and parallel structure in the water for establishing a large-scale tidal power generation complex.

### Description of the Related Art

The tidal current power generation recovers energy to generate electricity by using tidal flows because the tide changes directions regularly during the day depending on high and low tides.

The above tidal current power generation is an environmentally friendly alternative energy system that has no need to block a dam to secure a reservoir, does not impede movements of fish, and does not affect the surrounding ecosystem.

The ocean, which occupies 70% of the earth's surface, has infinite natural clean energy. Among the energy, the tidal current generated by tidal differences has the characteristic of being able to quantify the amount of energy that can be generated, due to the occurrence of high tide and low tide twice a day, and the constant regularity with a full moon cycle.

The development of renewable energy is not an option but a necessity in the current situation in which the need for energy use considering the environment is rapidly emerging.

The solar, wind or tidal energy is being developed as the renewable energy. However, in the case of solar energy, light condensing is possible only during daylight hours, efficiency is reduced by 10% in the morning or evening, and efficiency due to inclement weather is inevitably reduced by 20%.

The wind energy is unsuitable for power generation due to significantly reduced efficiency and irregularity because of domestic geographical conditions. The tidal energy is determined as the renewable energy that may be suitably applied to domestic area together with wave energy, when the domestic geographical conditions, such as Korea, is considered. However, there are limited places for obtaining energy because the tidal difference is used.

In contrast, since the tidal current flows constantly in areas with large tidal differences, the tidal energy can be predicted to some extent, and can be referred to as infinitely clean energy, together with solar thermal energy, that is not depleted no matter how much it is used.

In general, the tidal current power generation converts tidal energy into rotational kinetic energy by using a propeller built in a seabed or pole that may secure tidal currents.

However, because the tidal current has the characteristic of flowing while avoiding obstacles, the rotational kinetic energy conversion efficiency of the propeller is inevitably lowered though the amount of energy is large.

Further, because the conventional tidal current power generation achieves power generation in a stationary manner, there is a limit to using either one of flood and ebb tides.
(Patent Document 1) Korean Unexamined Patent Publication No. 10- 2004-0033161 (Published on April 21, 2004)
(Patent document 2) Korean Unexamined Patent Publication No. 10- 2013-0066258 (Published on March 20, 2013)

### SUMMARY OF THE INVENTION

The present invention is disclosed to solve the above-mentioned problems, and an object of the present invention is to provide a tide current power generation device using a tidal current induction hydraulic pipeline and a tidal current power generation tube turbine to implement power generation by using all tidal currents induced into the tidal current induction hydraulic pipeline in the both directions of flood and ebb tides, and achieve a multi-stage and parallel structure in the water, so that even the large-scale tidal power generation complex can be established.

The tide current power generation device using a tidal current induction hydraulic pipeline and a tidal current power generation tube turbine according to the present invention for achieving the above object includes: a plurality of concrete pile parts mostly and radially spaced apart at regular intervals, having an upper part with a shape protruding at a predetermined height above the sea level, and having a lower part embedded and fixed to a predetermined depth in the seabed; a pile connection support frame part provided to connect the concrete pile parts, and forming a multi-stage arrangement at equal intervals along the vertical direction in the water; a power generation part of the tidal current power generation tube turbine having the tidal current power generation tube turbine rotatably installed on the support frame parts to generate a motive power by the introduced current; a tidal current induction hydraulic pipeline installed to be connected to both front and rear of the tidal current power generation tube turbine, and formed in a shape with a diameter gradually smaller toward the tidal current power generation tube turbine to induce the introduction of the tidal current; a power transmission part that is installed on multi-layers so as to be individually connected to each of the tidal current power generation tube turbines installed on multi-layers, and has an air pocket at a rotating shaft located in water adjacent to the sea level; and an upper plate part provided to connect upper ends of the concrete pile parts, and installed with a generator connected to the power transmission part.

The concrete pile part 100 may include: a container member provided inside a lower end while a penetrating waterproofing agent is filled; an air inlet member connected to the container member to allow air to be introduced to the inside of the container member from the outside; a plurality of discharge rod members connected to the inside of the container member to allow the penetrating waterproofing agent to be discharged to the outside of the lower end when the air is introduced at high pressure through the air inlet member; and rod members installed on a side surface of the lower end to close a discharge portion of the permeable waterproofing agent of the discharge rod member, and spread outward upon discharging the penetrating waterproofing agent so as to allow the penetration waterproofing agent to react with moisture on the seabed and harden from the outside of the lower end.

An avoidance layer of garbage floating on the seabed may be formed between the support frame part installed at the lowermost end and the seabed.

The support frame part for the multi-layer installation may be installed with a hoist rail at a lower portion thereof, so that the power generation part of the tidal current power generation tube turbine and the tidal current induction hydraulic pipeline can be easily installed, maintained and repaired.

The tidal current power generation tube turbine may include: a hollow pipe member forming a body and rotatably installed in the support frame part that supports the power generation part; a support plate member installed on the support frame part to install the pipe member; a rotating plate member interposed between the pipe member and the support plate member, installed on a top surface thereof with the pipe member, and rotatably provided through a rotating bearing provided on the bottom surface; a plurality of fixing bar members connected to the rotating plate member and installed and erected to an inner side of the pipe member; a turbine member coupled with a shaft to the fixing bar member through the rotating bearing, and having a blade rotated by the introduced tidal current; a bevel gear connecting a shaft of the turbine member to the power transmission part; and a plurality of air pockets installed on the pipe member.

In the support plate member, a separation preventing member for preventing a separation of the rotating plate member provided therein may be coupled to an upper portion of the rotating plate.

The rotating plate member may be rotatably provided while meshing with a gear to a hydraulic piston member.

The tidal current induction hydraulic pipeline may be installed to be connected to both ends of the pipe member to introduce the tidal current into the inside of the pipe member, and a floating waste filtering device may be installed at an opposite end of the pipe member while having an oblique shape upward.

The motive power transfer part may include: a first rotating shaft passing through the pipe member and coupled to the bevel gear; a second rotating shaft coupled to an upper end of the first rotating shaft and disposed in a shape oblique upward; and a third rotating shaft coupled to an upper end of the second rotating shaft, having an upper end connected to the generator, and provided with the air pocket in an upper portion thereof positioned in the water adjacent to the sea level.

Each of the first rotating shaft, the second rotating shaft, and the third rotating shaft may be connected through a universal joint, and the third rotating shaft may be installed to pass through at least one tidal current induction hydraulic pipeline adjacent upward.

The third rotating shaft may be connected to a plurality of radially adjacent concrete pile parts through rotation shaft support rods, the rotation shaft support rods connected to the concrete pile parts, respectively, may integrated through one guide ring, and the third rotating shaft may be mounted on the guide ring.

The upper plate part may be installed with a crane, an elevator, a barge docking facility, a transformer, a power transmission facility, a central control room or control room, a worker's accommodation, installed with at least one working passage in a portion connected to the concrete pile part, and provided with a working ladder along the concrete pile part while being connected to the working passage.

The tide current power generation device using a tidal current induction hydraulic pipeline and a tidal current power generation tube turbine according to the present invention as described above, in the case pf using tidal currents, can have the increased efficiency of using tidal current energy since the density of water is about 830 times greater than the density of air, when assumed that the density of air is about 1.2 under standard conditions (20°C, 1 atm, 75% relative humidity).

In addition, 100 percent of the tidal current induced through the tidal current induction hydraulic pipeline can be converted into rotational kinetic energy in the turbine member of the tidal current power generation tube turbine, and both of the bidirectional tidal currents can be used through the rotation of the tidal current power generation tube turbine.

In addition, the tidal current power generation tube turbine power generation part and the tidal current induction hydraulic pipeline installed in the support frame part can be installed in multi-layers and arranged in parallel, so that the facility capacity can be realized with a large capacity, and accordingly, a large-scale tidal current power generation complex can be established.

When the above tidal power complex is established, the tidal power generating device may be installed in two areas spaced apart from each other at a predetermined distance, so that the time for development according to the time difference between high and low tides can be mutually supplemented, thereby overcoming the intermittent property that is a limit of renewable energy.

Further, the penetrating waterproofing agent reacts with the water on the seabed and hardens into a hard solid mass at the lower end of the concrete pile part embedded and fixed to the seabed, thereby fixing and supporting the concrete pile part, so that the concrete pile part can be prevented from subsiding.

Further, the garbage floating in the water may be prevented from flowing into the tidal current power generation tube turbine through the floating garbage filter, so that the power generation efficiency can be increased, and the tidal current induction hydraulic pipeline may be configured to have a diameter gradually decreased toward the tidal current power generation tube turbine to increase the flow rate of tidal current in the tidal current power generation tube turbine, so that the power generation efficiency can be increased.

### BRIEF DESCRIPTION OF THE DRAWINGS

FIGS. 1 to 3 are diagrams schematically explaining a tide current power generation device using a tidal current induction hydraulic pipeline and a tidal current power generation tube turbine according to the present invention.
FIG. 4 are diagrams schematically explaining a concrete pile part of the tide current power generation device using the tidal current induction hydraulic pipeline and the tidal current power generation tube turbine according to the present invention.
FIGS. 5 to 7 are diagrams schematically explaining the tidal current power generation tube turbine of the tide current power generation device using the tidal current induction hydraulic pipeline and the tidal current power generation tube turbine according to the present invention.
FIG. 8 is a diagram schematically explaining a tidal current induction hydraulic pipeline of the tide current power generation device using the tidal current induction hydraulic pipeline and the tidal current power generation tube turbine.
FIG. 9 is a diagram schematically explaining a power transmission part of the tide current power generation device using the tidal current induction hydraulic pipeline and the tidal current power generation tube turbine.
FIG. 10 is a diagram schematically showing a state in which the tide current power generation device using the tidal current induction hydraulic pipeline and the tidal current power generation tube turbine according to the present invention is established as a large-scale tidal current power generation complex at sea.

### DETAILED DESCRIPTION OF THE INVENTION

Hereinafter, configurations and operations for the exemplary and specific embodiments of the present invention will be described in detail with reference to the accompanying drawings.

Herein, it will be noted that the same elements have the same number as possible in adding reference numerals for elements in the drawings even if the elements are indicated on different drawings.

In addition, for describing the present invention, the detailed description of relevant known functions or configurations will be omitted to prevent the subject matter of the present invention from making unclear.

In addition, when a part "includes" a certain component, the above expression does not exclude other elements, but may further include the other elements, unless particularly stated otherwise.

Further, for describing the present invention, an upper side and a lower side are distinguished based on the installation condition in which an upper plate part is positioned above a portion embedded in the seabed of the concrete pile part and fixed.

Further, it will be described that the expression for the inside refers to each component or to an inward directional part partitioned by each component or a part in the direction thereof, and the expression for the outside refers to a direction opposite to the expression for the inside or a part in the direction thereof.

The present invention relates to a tide current power generation device using a tidal current induction hydraulic pipeline and a tidal current power generation tube turbine for using both directional flood and ebb tides to implement power generation, and achieving a multi-stage and parallel structure in the water to build a large-scale tidal power generation complex.

Further, because the tidal current has the characteristic of flowing while avoiding obstacles, the characteristic is required to be effectively controlled to increase the efficiency of tidal current power generation.

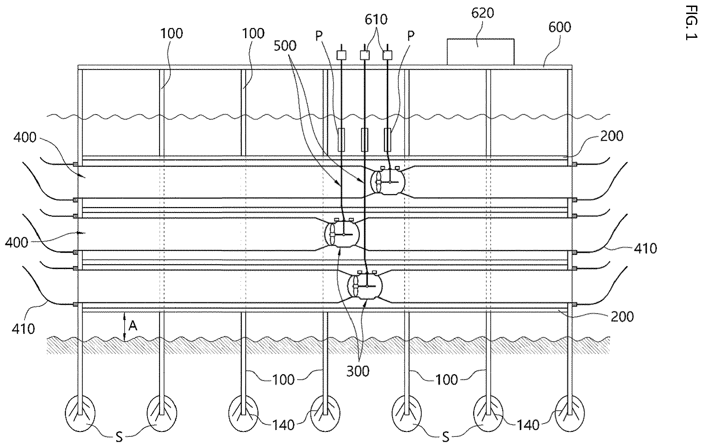

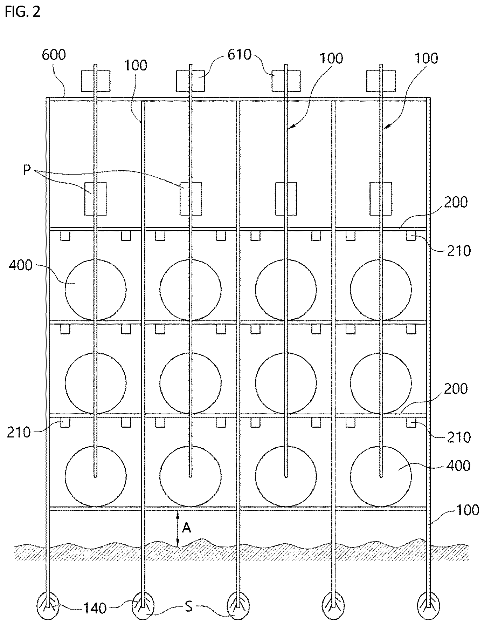

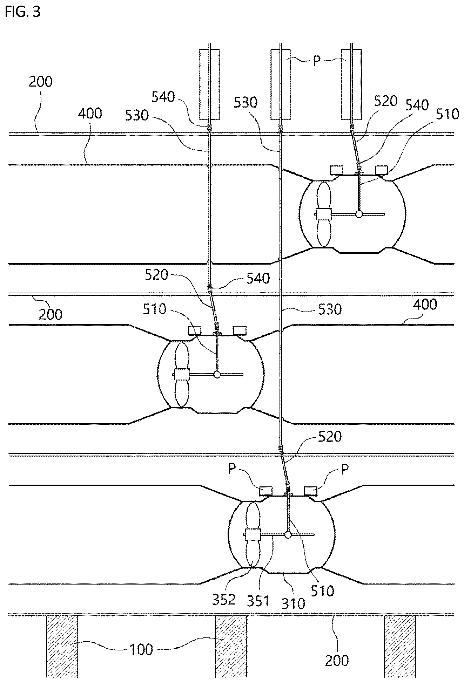

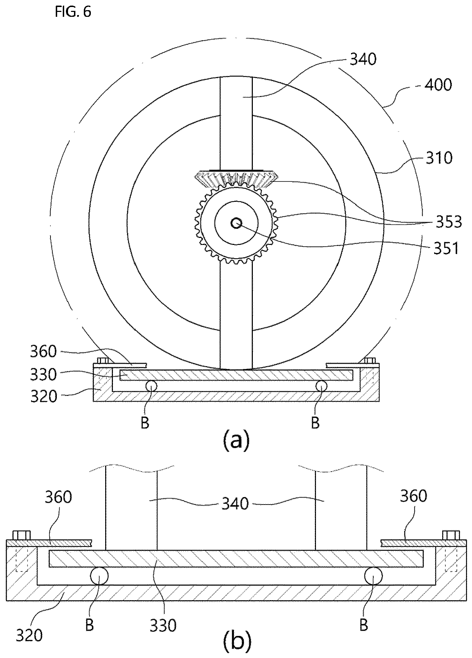

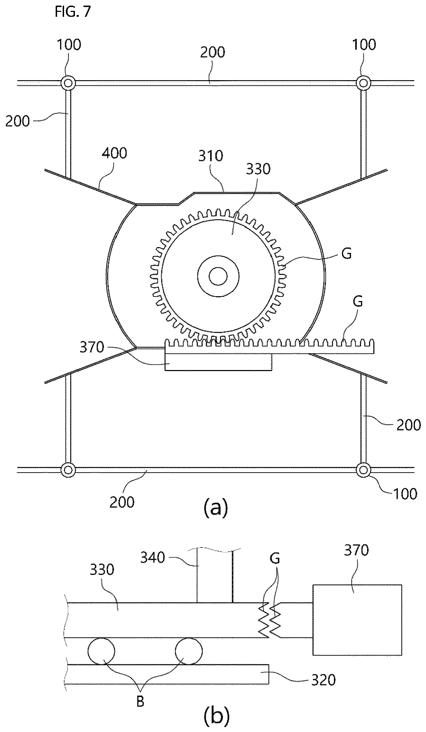

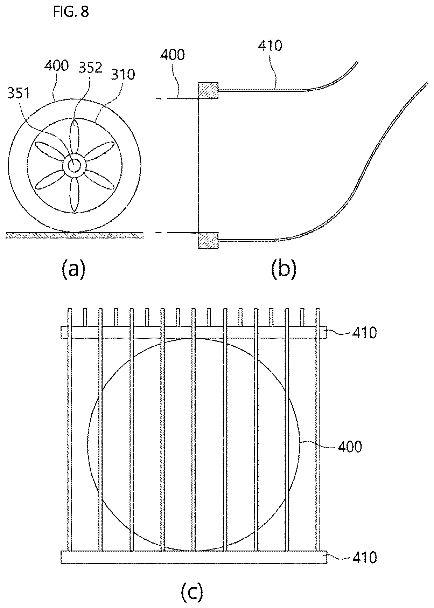

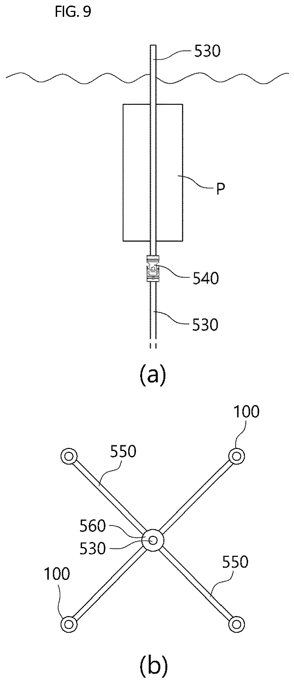

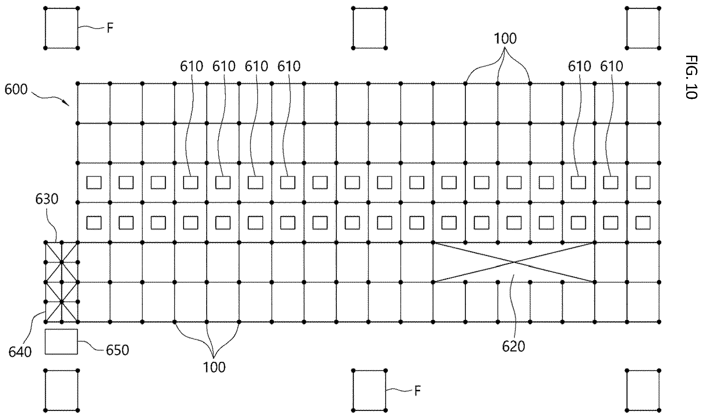

To this end, the configuration of the present invention, as shown in FIGS. 1 to 10, may include a concrete pile part 100, a support frame part 200, a tidal current power generation tube turbine 300, a current induction hydraulic pressure pipeline 400, a power transmission part 500, and an upper plate part 600.

First, the concrete pile part 100 of the present invention is configured such that a majority of concrete pile parts may be radially spaced apart at regular intervals, in which an upper part may form a top plate having a shape protruding at a predetermined height above the sea level, and a lower part may be fixed to a predetermined depth in the seabed.

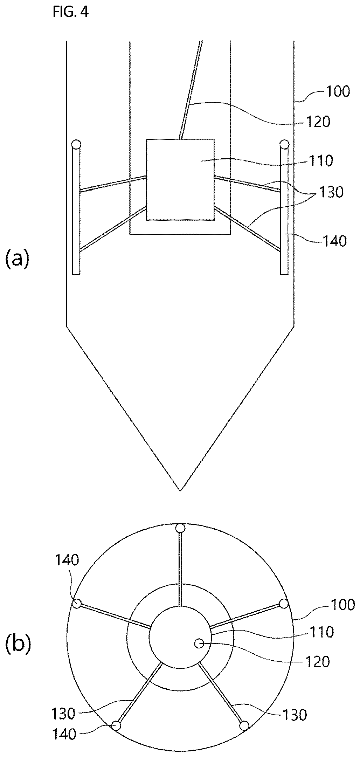

The above concrete pile part 100, as shown in FIG. 4, may include a container member 110 provided inside a lower end while a penetrating waterproofing agent S is filled.

In addition, the concrete pile part may include an air inlet member 120 connected to the container member 110 to allow air to be introduced to the inside of the container member 110 from the outside.

In addition, the concrete pile part may include a plurality of discharge rod members 130 connected to the inside of the container member 110 to allow the penetrating waterproofing agent S to be discharged to the outside of the lower end when the air is introduced at high pressure through the air inlet member 120.

Further, the concrete pile part may include rod members 140 installed on a side surface of the lower end to close a discharge portion of the permeable waterproofing agent S of the discharge rod member 130 and spread outward upon discharging the penetrating waterproofing agent S so as to allow the penetration waterproofing agent S to react with moisture on the seabed and harden from the outside of the lower end.

Accordingly, the penetrating waterproofing agent S reacts with the water on the seabed and hardens into a hard solid mass at the lower end of the concrete pile part 100 that is embedded and fixed to the seabed, thereby supporting the fixing of the concrete pile part 100, so that the concrete pile part 100 may be prevented from subsiding.

For example, the radial concrete pile part 100 may be installed to form an interval of about twice the diameter of the tidal current induction hydraulic pipeline 400 described later, so that the tidal current may smoothly flow.

In addition, a plurality of concrete pile parts 100, based on the flow direction of the tidal current, may be installed as much as the length of about 5 to 6 times the length of the tidal current power generation tube turbine 300 described later, that is, the length forming both ends of the tidal current induction hydraulic pipelines 400 installed at both ends of the tidal current power generation tube turbine 300.

The support frame part 200 of the present invention as shown in FIGS. 1 to 3 and 7, may be provided to connect the concrete pile parts 100, and may be installed to form a multi-stage arrangement at equal intervals along the vertical direction in the water.

The tidal current power generation pipeline turbine 300 and the tidal current induction hydraulic pipe 400 described later may be installed on the support frame part 200. As described above, the support frame part 200 is arranged in multi-stages, so that the tidal current power generation tube turbine 300 and the tidal current induction hydraulic pipeline 400 can be installed in multi-layers and arranged in parallel. Thus, the facility capacity can be realized with a large capacity, and accordingly, a large-scale tidal current power generation complex can be established.

In addition, the support frame part 200 is installed with a hoist rail 210 on a bottom surface thereof, so that as described above, the tidal current power generation tube turbine 300 and the tidal current induction hydraulic pipeline 400 described later can be easily installed, maintained and repaired.

In addition, an avoidance layer (A) of garbage floating on the seabed may be formed between the support frame part 200 installed at the lowermost end and the seabed, and the support frame part 200 forming a multi-stage in the present invention may be installed in the water between the sea level and the seabed. This is configured to realize an increase in power generation efficiency because the amount of energy for tidal currents in the water at a predetermined depth is greater than the amount of energy for tidal flow at the sea level due to the influence of water pressure.

The tidal current power generation tube turbine 300 of the present invention, as shown in FIGS. 1, 3, and 5 to 7, may be rotatably installed on the support frame parts 200, and may be provided so as to generate power by the tidal current introduced from the tidal current induction hydraulic pipeline 400 described later.

The above tidal current power generation tube turbine 300 may include a hollow pipe member 310 forming a body and rotatably installed in the support frame part 200, a support plate member 320 installed on the support frame part 200 to install the pipe member, a rotating plate member 330 interposed between the pipe member 310 and the support plate member 320, having a pipe member 310 installed on the top surface thereof, and rotatably provided through a rotating bearing B provided on the bottom surface, and a plurality of fixing bar members 340 connected to the rotating plate member 330 and installed and erected to an inner side of the pipe member 310.

In addition, the tidal current power generation tube turbine may include a turbine member 350 coupled with a shaft 351 to the fixing bar member 340 through the rotating bearing B, and having a blade 352 rotated by the introduced tidal current, a bevel gear 353 connecting the shaft 351 of the turbine member 350 to the power transmission part 500 described later, and a plurality of air pockets P installed on the pipe member 310.

Both ends of the pipe member 310 are manufactured to have the same diameter and shape as each other, and manufactured to have the same diameter and shape as an end of the tidal current power generation tube turbine 300 side of the tidal current induction hydraulic pipeline 400 described later installed while being connected to both ends of the pipe member 310, so that the occurrence of gaps or gaps may be blocked in the connection portion with the tidal current induction hydraulic pipeline 400 during using bidirectional tidal currents of flood and ebb tides.

The tidal current power generation tube turbine 300 configured in the above manner can convert 100 percent of the flow of the tidal current induced through the tidal current induction hydraulic pipeline 400 described later into rotational kinetic energy by the above-described turbine member 350, and both of the bidirectional tidal currents can be used through the rotation of the tidal current power generation tube turbine 300.

In addition, a separation preventing member 360 for preventing a separation of the rotating plate member 330 provided therein may be coupled to an upper portion of the support plate member 320. At this point, the rotating plate member 330 may be rotatably provided while meshing with a gear G to a hydraulic piston member 370.

In the tide current power generation device using the tidal current induction hydraulic pipeline and the tidal current power generation tube turbine according to the present invention, when the installation and construction up to the upper plate part 600 described later are completed, the hydraulic piston member 370 may be configured such that a hydraulic facility is built in the upper plate part 600, and a hydraulic hose is connected to the hydraulic piston member 370.

Accordingly, the hydraulic piston member 370 may be operated to respond to both of the bidirectional flood and ebb tides, so that the tidal current power generation tube turbine 300 may be rotated according to the rotation of the rotating plate member 330.

For example, in order to respond to the bidirectional tidal current, the tidal current power generation tube turbine 300 may be rotated by 180° through the above-described operation. In order to maintain and repair the turbine member 350, the tidal current power generation tube turbine 300 may be rotated by 90°, thereby ensuring an inlet that may be directed inward from both ends of the tube member 310.

In addition, when the tide current power generation device using the tidal current induction hydraulic pipeline and the tidal current power generation tube turbine according to the present invention is provided in a large- scale to establish the power generation complex in an area having a time difference of about 3 hours between high and low tides, the power generation around the clock may be facilitated due to the difference in driving time between the two sides, so that the intermittent property, which is a limit of renewable energy, may be overcome.

In particular, the self-weight of the tidal current power generation tube turbine 300 may be reduced by using buoyancy through the air pockets P installed on the pipe member 310, and the reduction of self-weight may serve to lower the load of weight when the tidal current power generation tube turbine 300 is rotated. at least one tidal current power generation tube turbine 300 may be installed to be arranged in series according to the underwater environment, tidal flow, tidal energy amount, or the like, so that efficient and universal development can be achieved.

The tidal current induction hydraulic pipeline 400 of the present invention, as shown in FIGS. 1 to 3, and 5 to 8, may be installed to be connected to both ends of the tidal current power generation tube turbine 300, and having a shape having a diameter gradually smaller toward the tidal current power generation tube turbine 300 to function to induce the inflow of the tidal current.

For example, the tidal current induction hydraulic pipeline 400 may have a length of approximately 5 to 6 times longer than the length of the tube member 310 of the tidal current power generation tube turbine 300, and have a diameter of approximately 2.5 times larger than the diameter of the pipe member 310, so that the flow rate may be increased in a section installed with the turbine member 350 even when the flow rate of the induced tidal current is slow.

This is configured to extend the time for maintaining the flow rate of tidal currents that can generate electricity in consideration of the flow rates at high and low tides.

The tidal current induction hydraulic pipeline 400 may be installed to be connected to both ends of the pipe member 310 to introduce the tidal current into the inside of the pipe member 310, and a floating waste filtering device 410 may be installed at an opposite end of the pipe member 310 while having an oblique shape upward.

The tidal current induction hydraulic pipeline 400 configured in the above manner may prevent the tidal current from avoiding the turbine member 350 that may serve as an obstacle in the tidal flow, and rather, may act such that the tidal flow may be concentrated to the turbine member 350.

In addition, the floating garbage filtering device 410 may have an end formed in a pointed shape, so that floating garbage such as cloth or net is caught. When the tidal current power generation tube turbine 300 is rotated to correspond to the bidirectional flow of flood and ebb tides, the floating garbage such as cloth or net may be separated from the caught state, by the flow of tidal current passing through the tidal current power generation tube turbine 300 from the opposite side and exiting the tidal current induction hydraulic pressure pipeline 400.

As shown in FIGS. 1, 3, 5 and 9, a plurality of power transmission parts 500 of the present invention may be provided to be individually connected to a plurality of tidal current power generation tube turbines 300, and may be provided with an air pocket P in an upper portion thereof positioned in the water adjacent to the sea level.

The power transmission part 500 may remarkably reduce the self-weight by buoyancy through the configuration of the above-described air pocket P, so that the overload due to weight or the loss of power transmission may be blocked in the process of power transmission.

The power transmission part 500 may include a first rotating shaft 510 passing through the pipe member 310 and coupled to the bevel gear 353, a second rotating shaft 520 coupled to an upper end of the first rotating shaft 510 and disposed in a shape oblique upward, and a third rotating shaft 530 coupled to an upper end of the second rotating shaft 520, having an upper end connected to the generator 610 described later, and provided with the above-described air pocket P in an upper portion thereof positioned in the water adjacent to the sea level.

Each of the first rotating shaft 510, the second rotating shaft 520, and the third rotating shaft 530 may be connected through a universal joint 540, and the third rotating shaft 530 may be installed to pass through at least one tidal current induction hydraulic pipeline 400 adjacent upward.

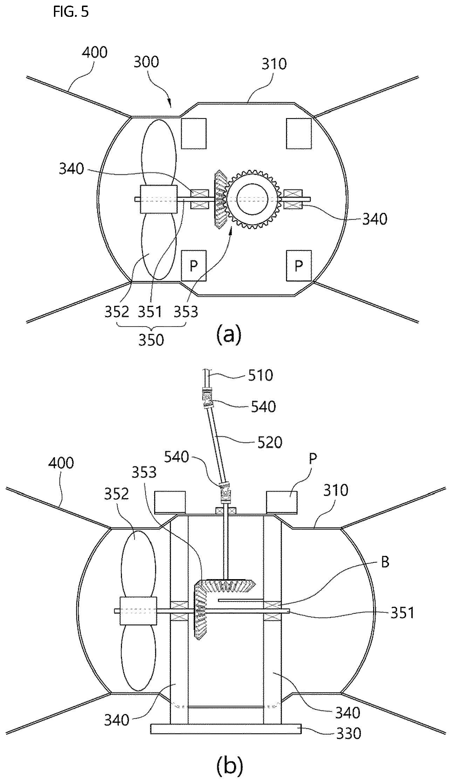

The third rotating shaft 530 may be connected to a plurality of radially adjacent concrete pile parts 100 through rotation shaft support rods 550, and arranged in a shape similar to 'X' as shown in FIG. 5b, the rotation shaft support rods 550 connected to the concrete pile parts 100, respectively, are integrated through one guide ring, and the third rotating shaft 530 may be mounted on the guide ring 560.

The rotational kinetic energy may be more efficiently transferred to the generator 610 described later through the arrangement of the power transmission part 500 configured in the above manner, and the third rotating shaft 530 may be prevented from being removed or separated due to the water pressure or tidal current in water through the configuration of the rotation shaft support rods 550 and the guide ring 560.

As shown FIGS 1, 2 and 7, the upper plate part 600 of the present invention may be provided to connect the upper ends of the concrete pile parts 100, and may be installed with the generator 610 connected to the power transmission part 500.

The upper plate part 600 may be installed with a crane 630, an elevator 640, a barge docking facility 650, a transformer, a power transmission facility, a central control room or control room 620, a worker's accommodation, installed with at least one working passage in a portion connected to the concrete pile part 100, and provided with a working ladder along the concrete pile part 100 while being connected to the working passage.

For example, the upper plate part 600 may be constructed to be connected to the upper ends of the concrete pile parts 100 through steel materials such as H-beams, and applied by reinforcing bars, ready-mixed concrete, and the like, and Maintenance or cleaning of the tidal current power generation tube turbine 300 or the tidal current induction hydraulic pressure pipeline 400 may be performed through the above-mentioned working passage and working ladder.

In addition, manpower and materials may be transported to the upper plate part from barges on the sea through the above-mentioned crane 630, elevator 640 and barge docking facility 650, and the operation of the above-described components constituting the present invention may be controlled or regulated from the central control room or control room 620.

In addition, a plurality of alarm facilities or safety sign facilities F may be installed outside the upper plate part 600, so that the safety of ships sailing at sea and the tidal current power generation device may be ensured. In addition, these warning facilities or safety sign facilities F may be installed by floating the facilities on the sea or by embedding and fixing equipment such as the above-described concrete pile part 100 by driving them to the seabed.

The present invention has been illustrated and described with specific embodiments, but the present invention is not limited to the above embodiments, and the embodiments may be modified or deformed in various forms within the scope without departing from the spirit of the present invention.

## Claims

1. A tide current power generation device using a tidal current induction hydraulic pipeline and a tidal current power generation tube turbine, the tide current power generation device comprising: a plurality of concrete pile parts having an upper part protruding at a predetermined height above a sea level, and having a lower part embedded and fixed to a predetermined depth in the seabed, in which a majority of the concrete pile parts are radially spaced apart at regular intervals; a support frame part provided to connect the concrete pile parts, and forming a multi- stage arrangement at equal intervals along a vertical direction in water; a tidal current power generation tube turbine rotatably installed on the support frame parts to generate a power by the introduced current; a tidal current induction hydraulic pipeline installed to be connected to both ends of the tidal current power generation tube turbine, and having a shape with a diameter gradually smaller toward the tidal current power generation tube turbine to induce the introduction of tidal currents; a plurality of power transmission parts provided to be individually connected to a plurality of tidal current power generation tube turbines, and having an air pocket at an upper portion thereof located in water adjacent to the sea level; and an upper plate part provided to connect upper ends of the concrete pile parts, and installed with a generator connected to the power transmission part.

2. The tide current power generation device of claim 1, wherein the concrete pile part includes: a container member provided inside a lower end while a penetrating waterproofing agent is filled; an air inlet member connected to the container member to allow air to be introduced to the inside of the container member from the outside;
a plurality of discharge rod members connected to the inside of the container member to allow the penetrating waterproofing agent to be discharged to the outside of the lower end when the air is introduced at high pressure through the air inlet member; and rod members installed on a side surface of the lower end to close a discharge portion of the permeable waterproofing agent of the discharge rod member and spread outward upon discharging the penetrating waterproofing agent so as to allow the penetration waterproofing agent to react with moisture on the seabed and harden from the outside of the lower end.

3. The tide current power generation device of claim 1, wherein an avoidance layer of garbage floating on the seabed is formed between the support frame part installed at the lowermost end and the seabed.

4. The tide current power generation device of claim 1, wherein the support frame part is installed with a hoist rail on a bottom surface thereof, so that the tidal current power generation tube turbine and the tidal current induction hydraulic pipeline are easily installed, maintained and repaired.

5. The tide current power generation device of claim 1, wherein the tidal current power generation tube turbine includes: a hollow pipe member forming a body and rotatably installed in the support frame part; a support plate member installed on the support frame part to install the pipe member; a rotating plate member interposed between the pipe member and the support plate member, installed on a top surface thereof with the pipe member, and rotatably provided through a rotating bearing provided on the bottom surface, and a plurality of fixing bar members connected to the rotating plate member, and connected to the rotating plate member and installed and erected to an inner side of the pipe member; a turbine member coupled with a shaft to the fixing bar member through the rotating bearing, and having a blade rotated by the introduced tidal current; a bevel gear connecting a shaft of the turbine member to the power transmission part; and a plurality of air pockets installed on the pipe member.

6. The tide current power generation device of claim 5, wherein a separation preventing member for preventing a separation of the rotating plate member provided therein is coupled to an upper portion of the support plate member.

7. The tide current power generation device of claim 5, wherein the rotating plate member is rotatably provided while meshing with a gear to a hydraulic piston member.

8. The tide current power generation device of claim 5, wherein the tidal current induction hydraulic pipeline is installed to be connected to both ends of the pipe member to introduce the tidal current into the inside of the pipe member, and a floating waste filtering device is installed at an opposite end of the pipe member to have an oblique shape upward.

9. The tide current power generation device of claim 5, wherein the motive power transfer part includes: a first rotating shaft passing through the pipe member and coupled to the bevel gear; a second rotating shaft coupled to an upper end of the first rotating shaft and disposed in a shape oblique upward; and a third rotating shaft coupled to an upper end of the second rotating shaft, having an upper end connected to the generator, and provided with the air pocket in an upper portion thereof positioned in the water adjacent to the sea level.

10. The tide current power generation device of claim 9, wherein each of the first rotating shaft, the second rotating shaft, and the third rotating shaft may be connected through a universal joint, and the third rotating shaft is installed to pass through at least one tidal current induction hydraulic pipeline adjacent upward.

11. The tide current power generation device of claim 9, wherein the third rotating shaft is connected to a plurality of radially adjacent concrete pile parts through rotation shaft support rods, the rotation shaft support rods connected to the concrete pile parts, respectively, are integrated through one guide ring, and the third rotating shaft is mounted on the guide ring.

12. The tide current power generation device of claim 1, wherein the upper plate part is installed with a crane, an elevator, a barge docking facility, a transformer, a power transmission facility, a central control room or control room, a worker's accommodation, installed with at least one working passage in a portion connected to the concrete pile part, and provided with a working ladder along the concrete pile part while being connected to the working passage.
